# EUROPEAN PATENT APPLICATION

(11) **EP 4 428 030 A1**
(43) Date of publication of application: **11.09.2024**
(21) Application number: 22887517.5
(22) Date of filing: 24.10.2022
(51) Int. Cl.: B63B 35/44, B63B 73/20, C25B 1/04, F03D 9/32, F03D 13/20, F03D 13/10, B63B 21/50, B63B 35/50, B63B 73/43

(54) **MARINE HYDROGEN CHARGING STATION**

(30) Priority: 01.11.2021 KR 20210147915
(71) Applicant: T.M.C Co., Ltd., Gimhae-si Gyeongsangnam-do 50875 (KR)
(72) Inventor: CHUN, Sang Eon, Geoje-si Gyeongsangnam-do 53269 (KR)
(74) Representative: Schmitt-Nilson Schraud Waibel Wohlfrom Patentanwälte Partnerschaft mbB
(86) International application number: PCT/KR2022/016226
(87) International publication number: WO 2023/075321

(57) **Abstract**

A marine hydrogen charging station according to one embodiment of the present invention comprises a wind power generation unit provided on a buoyant body floating on the sea and generating electricity by using wind power; an electrolysis unit for electrolyzing seawater by using the electricity generated from the wind power generation unit: and a hydrogen storage unit for storing hydrogen generated from the electrolysis unit.

## Description

### Technical field

The present invention relates to a marine hydrogen charging station. More specifically, the present invention relates to a marine hydrogen charging station capable of generating and storing hydrogen by wind power generation and electrolysis at sea, and easily charging hydrogen at sea as a transport means is connectable to a storage tank.

### Background art

In general, wind power generators were installed on land. However, the process of transporting the hydrogen generated by wind power to sea has been troublesome and costly. Thus, recently, a method for generating hydrogen by wind power at sea has been used.

When installed at sea, wind power generators were mainly installed in the shallow sea area and fixed directly to the seabed, which is not much different from the way wind power generators were installed on land.

In other words, wind power generators were fixed to the seabed to prevent drifting, but in this case, changes in the marine environment, such as wind direction, have caused extreme variations in electricity production, resulting in decreasing energy efficiency.

To this end, yawing structures were used in propellers to rotate the propeller according to the wind direction. However, yawing is very vulnerable to external impact and costly to maintain.

Furthermore, as conventional marine wind power generators were installed to be fixed in a specific location, energy efficiency drops significantly depending on the marine environment when the wind direction is weak.

As such, the prior art simply discloses a basic technology of mounting a wind power generator on a ship and using electrolysis to generate hydrogen.

Accordingly, when the power generation efficiency of the wind power generator deteriorates due to changes in the marine environment and accordingly the hydrogen production is low, the internal pressure of the tank storing hydrogen changes, making it very difficult to store and manage a small amount of hydrogen.

In addition, the prior art lacks a means of actively controlling the attitude or balance to respond to the wind direction at sea, resulting in rapidly decreasing power generation efficiency and hydrogen production efficiency as the wind direction changes.

This has raised the need for wind power generation technologies that can improve energy efficiency by minimizing the impact of changes in the marine environment, as well as hydrogen production technologies that can easily charge the hydrogen produced.

### Summary of invention

### Technical task

It is an object of the present invention to provide a marine hydrogen charging station capable of generating and storing hydrogen by wind power generation and electrolysis at sea, and easily charging hydrogen at sea as a transport means is connectable to a storage tank.

The technical tasks to be achieved in the present invention are not limited to the technical tasks mentioned above, and other technical tasks not mentioned will be clearly understood by those of ordinary skill in the art to which the present invention belongs from the description below.

### Means for solving technical task

In order to solve the above technical task, the present invention comprises: a wind power generation unit provided on a buoyant body floating on the sea and generating electricity by using wind power; an electrolysis unit for electrolyzing seawater by using the electricity generated from the wind power generation unit; and a hydrogen storage unit for storing hydrogen generated from the electrolysis unit.

The present invention further comprises a fixing means for fixing an end of the buoyant body to the seabed, so that the range of movement of the buoyant body at sea is limited to a predetermined range.

The wind power generation unit comprises: a propeller provided on an upper part of the buoyant body; a generator coupled to the propeller to generate electricity; and a support member supporting a lower part of the propeller on an upper part of the buoyant body, and the support member has a vertical surface formed along a first direction which is a longitudinal direction of the buoyant body, and the vertical surface is formed in a shape whose width increases from the upper part to the lower part, thereby preventing the propeller from drifting by external forces.

The present invention further comprises an accommodation space which is connected to the buoyant body, and is capable of accommodating at least one of a living quarter, a water electrolysis equipment, a compression equipment, a storage tank, and an office equipment.

The present invention further comprises a seating unit which is provided on an upper part of the accommodation space and on which a transport means including at least one of a drone and a helicopter is seated.

The present invention further comprises a support on an upper part of the buoyant body, which has a second direction, as a width direction on a horizontal plane, perpendicular to a first direction which is a longitudinal direction of the buoyant body, such that the width of the support is formed to be greater than the width of the buoyant body with respect to the second direction.

The propeller and the support member of the wind power generation unit are disposed on the support in plurality at predetermined intervals in the second direction.

The present invention further comprises an auxiliary member disposed along the first direction at a front and rear end of the support, such that the auxiliary member is formed to taper from an upper end of the support toward an upper part of the buoyant body.

A manufacturing method of the present invention comprises: producing a buoyant body within a dock; producing a support within the dock; and disposing the buoyant body having a first direction as a longitudinal direction, and coupling the support to an upper part of the buoyant body having a second direction perpendicular to the first direction as a longitudinal direction.

The manufacturing method further comprises: installing an auxiliary member at a front and rear end of the support along the first direction, such that the auxiliary member is formed to taper from an upper end of the support toward an upper part of the buoyant body, and welding the auxiliary member to the support; installing, on an upper part of the support, a wind power generation unit for generating electricity by using wind power; installing, inside the buoyant body, an electrolysis unit for electrolyzing seawater by using the electricity generated from the wind power generation unit; and installing, inside the buoyant body, a hydrogen storage unit for storing hydrogen generated from the electrolysis unit.

### Effect of invention

According to an embodiment of the present invention, the present invention has an effect of being capable of generating and storing hydrogen by wind power generation and electrolysis at sea, and easily charging hydrogen at sea as a transport means is connectable to a storage tank.

The effects obtainable in the present invention are not limited to the above-mentioned effects, and other effects not mentioned may be clearly understood by those of ordinary skill in the art to which the present invention pertains from the following description.

### Brief description of drawings

Fig. 1 is a perspective view of a marine hydrogen charging station according to an embodiment of the present invention;
Fig. 2 is a perspective view of a support and an auxiliary member according to an embodiment of the present invention;
Fig. 3 is a diagram illustrating a fixing means according to an embodiment of the present invention;
Fig. 4 is a perspective view of an accommodation space and a seating part according to an embodiment of the present invention;
Fig. 5 is a diagram illustrating a method for charging hydrogen of a transport means using a marine hydrogen charging station according to an embodiment of the present invention; and
Fig. 6 is a diagram illustrating a method for manufacturing a marine hydrogen charging station according to an embodiment of the present invention.

### Best mode for carrying out the invention

Hereinafter, preferred embodiments according to the present invention will be described in detail with reference to the accompanying drawings.

The detailed description set forth below in conjunction with the accompanying drawings is intended to describe exemplary embodiments of the present invention and is not intended to represent the only embodiments in which the present invention may be carried out.

In order to clearly explain the present invention in the drawings, portions that are not related to the present invention are omitted, and like reference numerals are used to refer to like elements throughout the specification.

In an embodiment of the present invention, expressions such as "or" and "at least one" may indicate one of the words listed together, or a combination of two or more.

Hereinafter, in the embodiments of the present invention, the size, thickness and shape of each component is exaggerated for illustrative purposes only, and the actual marine hydrogen charging station may have different sizes and shapes.

In addition, the connection structure of the wiring is illustrated briefly for convenience, and other connection forms may be applied. The terms upper part, lower part, side part are used with respect to a specific component, but these are for illustrative purposes only, and may be interpreted in a direction different from the indicated direction depending on the rotation or placement of the device.

Before describing the marine hydrogen charging station of the present invention, prior art will be described.

In general, wind power generators were installed on land. However, the process of transporting the hydrogen generated by wind power to sea has been troublesome and costly. Thus, recently, a method for generating hydrogen by wind power at sea has been used.

When installed at sea, wind power generators were mainly installed in the shallow sea area and fixed directly to the seabed, which is not much different from the way wind power generators were installed on land.

In other words, wind power generators were fixed to the seabed to prevent drifting, but in this case, changes in the marine environment, such as wind direction, have caused extreme variations in electricity production, resulting in decreasing energy efficiency.

To this end, yawing structures were used in propellers to rotate the propeller according to the wind direction. However, yawing is very vulnerable to external impact and costly to maintain.

Furthermore, as conventional marine wind power generators were installed to be fixed in a specific location, energy efficiency drops significantly depending on the marine environment when the wind direction is weak.

As such, the prior art simply discloses a basic technology of mounting a wind power generator on a ship and using electrolysis to generate hydrogen.

Accordingly, when the power generation efficiency of the wind power generator deteriorates due to changes in the marine environment and accordingly the hydrogen production is low, the internal pressure of the tank storing hydrogen changes, making it very difficult to store and manage a small amount of hydrogen.

In addition, the prior art lacks a means of actively controlling the attitude or balance to respond to the wind direction at sea, resulting in rapidly decreasing power generation efficiency and hydrogen production efficiency as the wind direction changes.

The marine hydrogen charging station according to an embodiment of the present invention is conceived out of such technological need, and the wind power generation technologies have advantages such as being capable of improving energy efficiency by minimizing the impact of changes in the marine environment, and easily charging the hydrogen produced.

Hereinafter, a marine hydrogen charging station according to an embodiment of the present invention will be described.

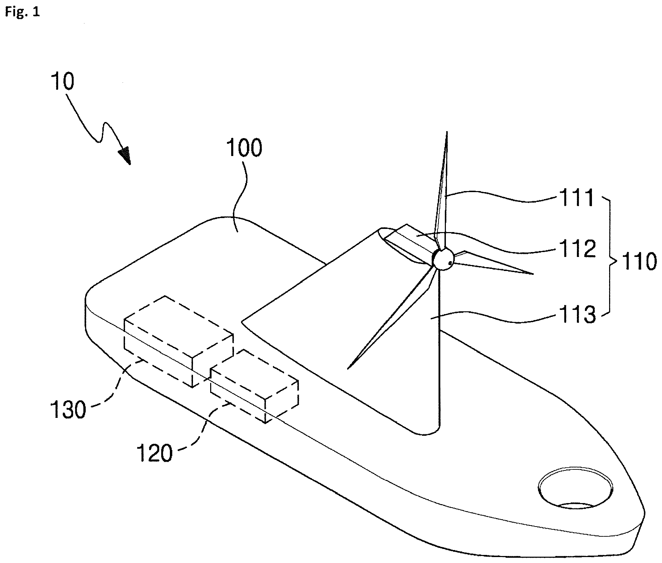

Fig. 1 is a perspective view of a marine hydrogen charging station according to an embodiment of the present invention.

Referring to Fig. 1, the marine hydrogen charging station 10 of the present invention may comprise a wind power generation unit 110, an electrolysis unit 120, and a hydrogen storage unit 130.

First, the wind power generation unit 110 is provided on a buoyant body floating on the sea and generates electricity by using wind power, which may comprise a propeller 111, a generator 112, and a support member 113.

The propeller 111 is provided on an upper part of the buoyant body, the generator 112 is coupled to the propeller 111 and arranged to generate electricity, and the support member 113 supports the generator 112 and a lower part of the propeller 111 on an upper part of and the buoyant body.

The generator 112 may be provided on an upper part or an inside of the support member 113, or on an upper part of the buoyant body 100, and the installation location is not limited thereto.

The support member 113 has a vertical surface formed along a first direction which is a longitudinal direction of the buoyant body 100, and the vertical surface is formed in a shape whose width increases from the upper part to the lower part, thereby preventing the propeller 111 from drifting by external forces.

For example, the support member 113 may be provided in the shape of a vertical tail blade of an airplane, which has an advantage that a yawing structure does not have to be applied to the propeller 111 of the present invention.

All conventional wind power generators 112 have a turbine mounted on a cylindrical tower to apply a yawing method for controlling the direction of the turbine according to the wind direction. However, the yawing structure is very vulnerable to external impact and costly to maintain.

However, the buoyant body 100 of the present invention is floating on the sea without having a fixed location, and thus when applying the feature of the support member 113 as described above, the direction of the buoyant body 100 may be automatically controlled according to the wind direction without a separate control device so as to allow the use of wind of good quality.

Accordingly, the energy efficiency of wind power generation may be maximized while achieving structural stability, the cost of building turbines for directional control may be reduced, and the maintenance costs may be reduced by decreasing the likelihood of turbine failure.

Next, the electrolysis unit 120 electrolyzes seawater using electricity generated from the wind power generation unit 110.

The electrolysis unit 120 electrolyzes seawater to produce hydrogen, oxygen, and sodium hypochlorite.

The hydrogen produced is transported to the hydrogen storage unit 130, which will be described later, and the sodium hypochlorite may be used to sanitize seawater introduced into the ballast tank of the ship.

In general, the ship may be balanced by using pumps to introduce ambient seawater into the ballast tank or to drain the seawater in the ballast tank as needed.

In this case, there is a risk that various foreign substances, microorganisms such as plankton, etc., or bacteria included in the seawater of the incoming region may be discharged into the sea in a different environment, causing changes in the marine ecosystem.

However, by using the electrolysis unit 120 of the present invention, it is possible to kill the microorganisms included in the seawater in the ballast tank with sodium hypochlorite before discharging the same into the sea, which may prevent disturbance and destruction of the marine ecosystem.

Subsequently, the hydrogen storage unit 130 may be provided to store hydrogen generated from the electrolysis unit 120 described above.

The hydrogen storage unit 130 may be arranged in the form of a storage tank, and the generated hydrogen may be stored in the storage tank in the form of liquefied hydrogen, hydrogen gas through a compressor and hydrogen transport line connected to the electrolysis unit 120.

The electrolysis unit 120 and hydrogen storage unit 130 described above may be provided on an upper part or an inside of the buoyant body 100, or may be provided on an upper part or an inside of a support which will be described later, but there is no limitation on the location of the arrangement.

The basic feature of a marine hydrogen charging station according to an embodiment of the present invention has been discussed above.

However, the marine hydrogen charging station according to an embodiment of the present invention may also be provided in various forms as shown below.

In an embodiment, the marine hydrogen charging station of the present invention may further comprise a support.

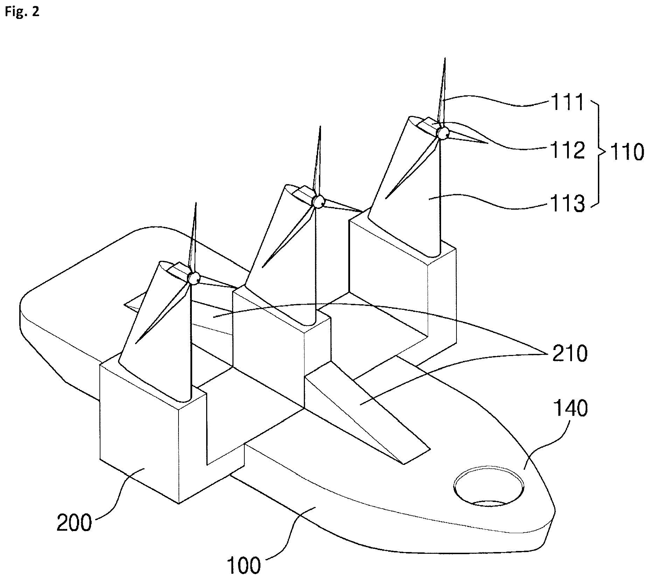

Fig. 2 is a perspective view of a support and an auxiliary member according to an embodiment of the present invention.

Referring to Fig. 2, a support 200 may be provided on an upper part of the buoyant body 100, which has a second direction, as a width direction on a horizontal plane, perpendicular to a first direction which is a longitudinal direction of the buoyant body 100, such that the width of the support 200 is formed to be greater than the width of the buoyant body 100 with respect to the second direction.

Accordingly, the propeller 111 and the support member 113 of the wind power generation unit 110 may be disposed in plurality at predetermined intervals in the second direction on the support 200.

In other words, electricity may be generated through a plurality of propellers 111 on one buoyant body 100, and thus the energy efficiency may be improved.

Such a support 200 may be provided in a shape to have columns protruding upwardly at both ends and the center part, and may be installed such that the support member 113 of the wind power generation unit 110 described above is supported on an upper part of the column.

In an embodiment, a ceiling member connecting columns may be optionally installed on an upper part of the column structure of the support 200, as needed.

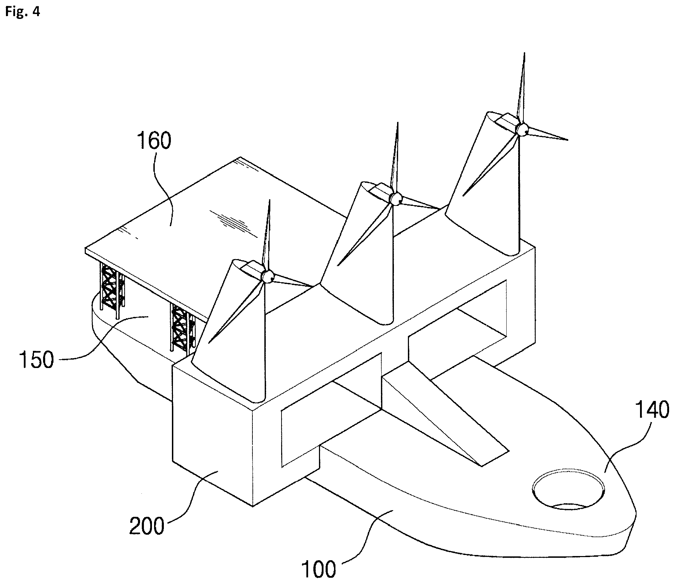

In Fig. 2, the ceiling member is omitted, and in Fig. 4, the ceiling member is installed on an upper part of the column of the support 200 to secure an interior workspace.

As such, when the ceiling member is installed on an upper part of the column of the support 200, the structural stability between the columns may be further improved, and the lower part of the support member 113 of the wind power generation unit 110 may be more fixedly supported.

Referring to Fig. 2 again, in an embodiment, the marine hydrogen charging station of the present invention may further comprise an auxiliary member 210.

The auxiliary member 210 may be disposed along a first direction at a front and rear end of the support 200, such that the auxiliary member is formed to taper from an upper end of the support 200 toward an upper part of the buoyant body 100.

The auxiliary member 210 is installed being welded to the support 200, thereby further improving the structural stability of the support 200.

In addition, in an embodiment, the marine hydrogen charging station of the present invention may further comprise a fixing means for fixing an end of the buoyant body 100 to the seabed, so that the range of movement of the buoyant body 100 at sea is limited to a predetermined range.

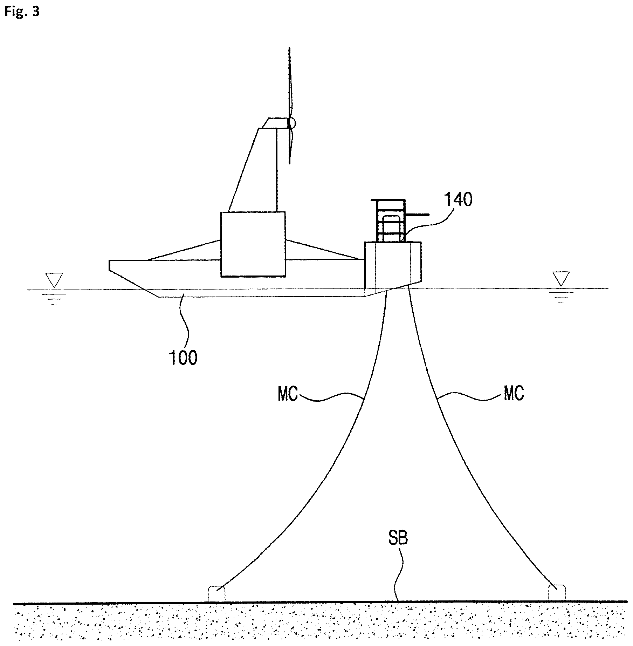

Fig. 3 is a diagram illustrating a fixing means according to an embodiment of the present invention.

Referring to Figs. 2 and 3, the fixing means 140 may be provided in the form of a turret or an anchor. As the marine hydrogen charging station of the present invention further comprises a fixing means 140, the location and radius of movement of the buoyant body 100 on the sea may be easily maintained within a predetermined range.

Fig. 3 illustrates a marine hydrogen charging station provided with a turret in an embodiment, wherein the turret is connected to the seabed (SB) by a mooring line (MC) to be fixed at a specific point at sea.

In other words, as the location of the turret is fixed, the marine hydrogen charging station of the present invention has a limited range of movement with respect to the location of the turret.

Accordingly, the buoyant body 100 automatically rotates around the turret in a direction opposite to the wind direction, and thus direction change of the buoyant body 100 has become easier, enabling a more stable operation of the marine hydrogen charging station.

In addition, in an embodiment, the marine hydrogen charging station of the present invention may further comprise an accommodation space.

Fig. 4 is a perspective view of an accommodation space and a seating unit according to an embodiment of the present invention.

Referring to Fig. 4, the accommodation space 150 is connected to the buoyant body 100, and may be provided to accommodate at least one of a living quarter, a water electrolysis equipment, a compression equipment, a storage tank, and an office equipment.

For example, the accommodation space 150 may be provided with an electrolysis equipment for generating hydrogen, a storage tank for storing the generated hydrogen and a compression equipment for charging.

In addition, the marine hydrogen charging station according to an embodiment of the present invention may further comprise a seating unit 160 provided on an upper part of the accommodation space 150.

The seating unit 160 has a transport means, which will be described later, seated thereon for transporting the hydrogen generated at the marine hydrogen charging station of the present invention to an onshore plant, wherein the transport means may include at least one of a drone and a helicopter.

In an embodiment, the seating unit 160 may be disposed at a rear of the wind power generation unit 110, and in this case, the buoyant body 100 will automatically always face the windward direction by yawing (weathervaning) with the wind direction.

Accordingly, when a transport means such as a drone or a helicopter approaches the marine hydrogen charging station, it can approach the seating unit 160 from the rear of the wind power generation unit 110 against the wind, allowing a more stable landing.

In addition, as the transport means moves from the rear of the wind power generation unit 110, it prevents blocking the wind flow used for wind power generation, which allows obtaining good quality wind.

Further, the marine charging station according to an embodiment of the present invention may further comprise a self-propulsion means (not shown) such as a motor.

Accordingly, the marine charging station of the present invention is capable of self-propulsion at sea, and thus it may select and move to areas with strong wind, thereby maximizing energy efficiency through wind power generation using high quality wind.

In addition, by applying a marine hydrogen charging station according to an embodiment of the present invention, it is possible to charge a hydrogen transport means with hydrogen as follows.

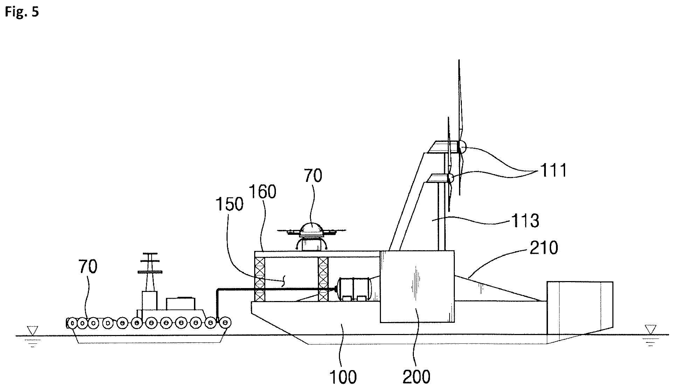

Fig. 5 is a diagram illustrating a method for charging hydrogen of a transport means using a marine hydrogen charging station according to an embodiment of the present invention.

Referring to Fig. 5, the marine hydrogen charging station of the present invention is provided with a transport line connected from a hydrogen storage unit, allowing hydrogen to be transported from the hydrogen storage unit to a transport means 70.

The transport means 70 may be provided in the form of a hydrogen-powered ship, a marine drone including marine drone taxi, airborne transporter, an airship, and a helicopter.

The transport line is provided in the form of a pipe so that hydrogen is transported from the storage tank to the transport means 70 through the transport line by pumping of a high pressure pump.

In an embodiment, when using a drone-type transport means 70, it is possible to supply hydrogen by filling an atmospheric pressure container with hydrogen and airlifting it over land, or by connecting a transport line to a ship or taxi drone.

Conventionally, high-pressure or liquefied hydrogen produced offshore, about 50 kilometers to about 100 kilometers from the coast, is transported in bulk by ship, which is a time-consuming and costly process.

However, as it becomes possible to fill atmospheric pressure containers with hydrogen in small airplanes using a drone-type transport means 70, there is an advantage that small quantities of atmospheric hydrogen may be delivered at a lower cost.

In particular, since hydrogen is lighter than air, when supplying atmospheric hydrogen having buoyancy in air to a nearby onshore hydrogen charging station using sea breezes without requiring particular energy, green hydrogen may be supplied at a much lower cost than the conventional transportation means.

In addition, in an embodiment, the transport line described above may be provided in a variety of forms, in addition to the examples described above, and may be provided in the form of a pipeline laid along the seabed and connected to land to allow hydrogen to be transported directly to an onshore plant.

The marine hydrogen charging station according to an embodiment of the present invention as described above may be manufactured through the following steps.

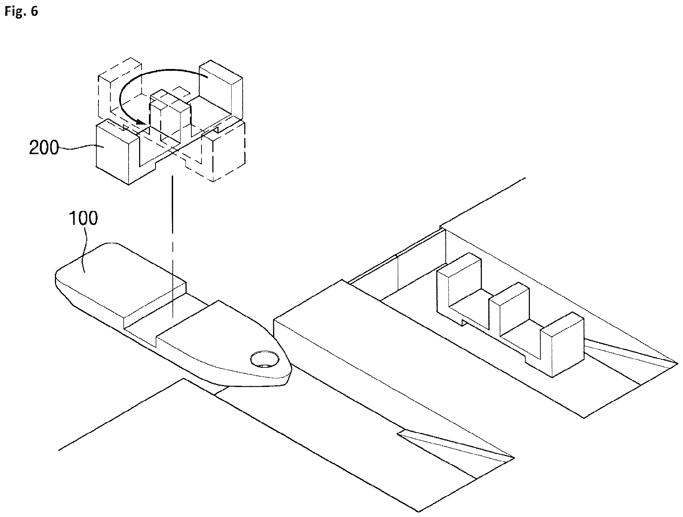

Fig. 6 is a diagram illustrating a method for manufacturing a marine hydrogen charging station according to an embodiment of the present invention.

Referring to Figs. 2 and 6, first, the steps of producing a buoyant body 100 within a dock, and producing a support 200 within a dock are performed.

Then, the steps of disposing the buoyant body 100 having a first direction as a longitudinal direction, and coupling the support 200 to an upper part of the buoyant body 100 having a second direction perpendicular to the first direction as a longitudinal direction are performed.

This allows the buoyant body 100 and the support 200 to be manufactured within the dock, and then assembled so that the assembly directions are perpendicular to each other with respect to the longitudinal direction.

In other words, there is an advantage that the existing dock can be used without having to provide a new dock that is large in both width and length.

At this time, when using a floating dock, seawater may be introduced into a ballast tank provided inside the buoyant body 100 to sink the buoyant body 100, and then the support 200 may be floated on the sea surface and transported to an upper part of the buoyant body 100 so as to couple the support 200 to the buoyant body 100.

Then, the step of installing an auxiliary member 210 along a first direction at a front and rear end of the support 200, such that the auxiliary member is formed to taper from an upper end of the support 200 toward an upper part of the buoyant body 100, and welding the auxiliary member 210 to the support 200 is performed.

Referring to the drawings, the support 200 may be provided in a shape having columns protruding upwardly at both ends and the center part, in which case a ceiling member connecting the columns may be optionally installed.

In Fig. 2, the ceiling member is omitted, and in Fig. 4, the ceiling member is installed on an upper part of the column of the support 200 to secure an interior workspace.

When the ceiling member is installed as above, the structural stability between the columns may be further improved, and the lower part of the wind power generation unit 110 that will be installed on an upper part of the support 200 may be more fixedly supported.

Referring to Figs. 2 and 6 again, the step of installing, on an upper part of the support 200, a wind power generation unit 110 generating electricity by using wind power is performed.

In this step, a support member 113 may be installed on an upper part of the support 200, a propeller 111 may be provided on an upper part of the support member 113, and a generator 112 may be connected to the propeller 111 so that electricity is generated by the operation of the propeller 111.

In this case, the generator 112 may be arranged inside the support member 113 or inside the support 200, but there is no limitation on the location of installation.

Then, the step of installing, inside the buoyant body 100, an electrolysis unit for electrolyzing seawater using electricity generated from the wind power generation unit 110 is performed.

Then, the step of installing, inside the buoyant body 100, a hydrogen storage unit for storing hydrogen generated from the electrolysis unit is performed.

The electrolysis unit and the hydrogen storage unit may be installed on an upper part or an inside of the buoyant body 100, and may be provided inside the support 200, but there is no limitation on the location of the arrangement.

In addition, a fixing means 140 for fixing an end of the buoyant body 100 to the seabed, a storage space 150 provided with a hydrogen storage tank and a compression equipment, and a seating unit 160 in which a hydrogen transport means is seated may be further provided.

The structure and shape of the marine hydrogen charging station of the present invention is not limited to the foregoing, and various modifications and variations may be made in the technical field to which the present invention belongs.

As described above, the use of a marine hydrogen charging station according to an embodiment of the present invention may have the following advantages.

As it becomes possible to assemble the buoyant body and the support such that the assembly directions are perpendicular to each other with respect to the longitudinal direction after manufacturing the buoyant body and the support within the dock, it becomes easier to manufacture the support disposed perpendicular to the longitudinal direction of the buoyant body.

Accordingly, it becomes possible to install multiple propellers and generators for wind power generation along the longitudinal direction of the support, which significantly improves energy efficiency.

In addition, as the support member supporting a lower part of the propeller is provided in the shape of a vertical tail blade of an airplane, the change of direction of the buoyant body may be automatically controlled without a yawing system, making it possible to use wind of good quality.

Furthermore, as it becomes possible to fix one side of the buoyant body at sea using a fixing means, the buoyant body automatically rotates in a direction opposite to the wind direction, which makes it easier to change the direction of the buoyant body.

The embodiments of the present invention disclosed in the present specification and drawings are merely illustrative examples of the present invention to easily explain the technical disclosure of the present invention and facilitate understanding of the present invention, and are not intended to limit the scope of the present invention.

Accordingly, in addition to the embodiments disclosed above, all modifications or changes derived based on the technical idea of the present invention should be construed as being included in the scope of the present invention.

## Claims

1. A marine hydrogen charging station, comprising:
a wind power generation unit provided on a buoyant body floating on a sea and configured to generate electricity by using a wind power;
an electrolysis unit configured to electrolyze seawater by using the electricity generated from the wind power generation unit; and
a hydrogen storage unit configured to store hydrogen generated from the electrolysis unit.

2. The marine hydrogen charging station of claim 1, further comprising:
a fixing means configured to fix an end of the buoyant body to a seabed, and
wherein a range of movement of the buoyant body at the sea is limited to a predetermined range by the fixing means.

3. The marine hydrogen charging station of claim 1, wherein the wind power generation unit comprises:
a propeller provided on an upper part of the buoyant body;
a generator coupled to the propeller to generate electricity; and
a support member supporting a lower part of the propeller on the upper part of the buoyant body, and
wherein the support member is configured to have a vertical surface formed along a first direction which is a longitudinal direction of the buoyant body, and the vertical surface is configured to be formed in a shape whose width increases from an upper part to a lower part, thereby preventing the propeller from drifting by external forces.

4. The marine hydrogen charging station of claim 1, further comprising:
an accommodation space configured to be connected to the buoyant body, and
wherein the accommodation space is configured to accommodate at least one of a living quarter, a water electrolysis equipment, a compression equipment, a storage tank, and an office equipment.

5. The marine hydrogen charging station of claim 4, further comprising:
a seating unit provided on an upper part of the accommodation space and on which a transport means including at least one of a drone and a helicopter is seated.

6. The marine hydrogen charging station of claim 1, further comprising:
a support provided on an upper part of the buoyant body and configured to have a second direction, as a width direction on a horizontal plane, perpendicular to a first direction which is a longitudinal direction of the buoyant body,
wherein a width of the support is configured to be formed to be greater than a width of the buoyant body with respect to the second direction.

7. The marine hydrogen charging station of claim 6, wherein the propeller and the support member of the wind power generation unit is configured to be disposed on the support in plurality at predetermined intervals in the second direction.

8. The marine hydrogen charging station of claim 6, further comprising:
an auxiliary member configured to be disposed along the first direction at a front end and a rear end of the support, and
wherein the auxiliary member is configured to be formed to taper from an upper end of the support toward the upper part of the buoyant body.

9. A method of manufacturing a marine hydrogen charging station, comprising:
producing a buoyant body within a dock;
producing a support within the dock; and
disposing the buoyant body having a first direction as a longitudinal direction, and coupling the support to an upper part of the buoyant body having a second direction perpendicular to the first direction as a longitudinal direction.

10. The method of claim 9, further comprising:
installing an auxiliary member at a front end and a rear end of the support along the first direction, wherein the auxiliary member is configured to be formed to taper from an upper end of the support toward the upper part of the buoyant body;
welding the auxiliary member to the support;
installing, on an upper part of the support, a wind power generation unit for generating electricity by using wind power;
installing, inside the buoyant body, an electrolysis unit for electrolyzing seawater by using the electricity generated from the wind power generation unit; and
installing, inside the buoyant body, a hydrogen storage unit for storing hydrogen generated from the electrolysis unit.
